**Europäisches Patentamt**

**European Patent Office**

**Office européen des brevets**

(11) Veröffentlichungsnummer: **0 034 352**
B1

(12) **EUROPÄISCHE PATENTSCHRIFT**

(45) Veröffentlichungstag der Patentschrift:
09.05.84

(51) Int. Cl.³: **H 01 B 13/02, H 01 B 13/26**

(21) Anmeldenummer: **81101031.3**

(22) Anmeldetag: **13.02.81**

(54) **Vorrichtung zur Umspinnung von Verseilelementen.**

(30) Priorität: **18.02.80 DE 3006055**

(43) Veröffentlichungstag der Anmeldung:
**26.08.81 Patentblatt 81/34**

(45) Bekanntmachung des Hinweises auf die Patenterteilung:
**09.05.84 Patentblatt 84/19**

(84) Benannte Vertragsstaaten:
**AT BE CH FR GB IT LI LU NL SE**

(56) Entgegenhaltungen:
**DE - A - 2 411 151**
**FR - A - 828 037**
**FR - A - 1 487 959**
**FR - A - 2 357 043**
**GB - A - 1 123 137**

(73) Patentinhaber: **SIEMENS AKTIENGESELLSCHAFT,**
**Berlin und München Wittelsbacherplatz 2,**
**D-8000 München 2 (DE)**

(72) Erfinder: **Oestreich, Ulrich, Dipl.-Ing.,**
**Karl-Witthalm-Strasse 15, D-8000 München 70 (DE)**

ACTORUM AG

## Beschreibung

Die Erfindung bezieht sich auf eine Vorrichtung zur Umspinnung von Verseilelementen, bei der auf einem feststehenden Tragrohr eine drehbare Spinneinrichtung angeordnet ist und im Inneren des Tragrohres die Verseilelemente verlaufen.

Eine Vorrichtung dieser Art ist aus der DE-A-2 053 957 bekannt, wobei jedoch über die Art und Weise der Verseilung der Verseilelemente nichts näheres ausgesagt ist. Bei der bekannten Anordnung ist ein zusätzlicher Speicher für das aufzuspinnende Material vorgesehen, welcher freilaufend gelagert ist, während der benachbarte Spinner über einen besonderen Antrieb abschnittsweise wechselnd in der einen oder anderen Richtung verdreht wird. Auf diese Weise lässt sich eine Art SZ-Umspinnung der Verseilelemente verwirklichen. Hier wird auf ein bereits fertig verseiltes Gut eine SZ-Haltewendel aufgebracht. Der Spinner ist im Prinzip ein abgewandelter Zentralspinner.

Aus der DE-A-2 411 151 ist eine Verseilvorrichtung bekannt, bei der zwischen einer Führungsscheibe und einer Lochscheibe ein Rohr mit extrem glatter Oberfläche angeordnet ist. Da hierbei mit wechselnden Verseilrichtungen (SZ-Verseilung) gearbeitet wird, dient das Rohr mit seiner Oberfläche auch als Speichereinrichtung (Rohrspeicher). Bei der bekannten Vorrichtung werden mittels dieses Rohrspeichers Grundbündel zu Hauptbündeln verseilt, wobei die Grundbündel von Vorratsspulen abgezogen werden. Eine Umspinnung der Hauptbündel mit einer Haltewendel oder dgl. ist nicht vorgesehen.

Bei der SZ-Verseilung der Verseilelemente soll der Abstand Verseilpunkt - Scheibe soweit wie möglich gemindert werden. Auf diese Weise liesse sich das besonders bei kurzen Schlaglängen auftretende Problem beseitigen, welches darin besteht, dass durch federnde Torsion des verseilten Stranges samt Haltewendel ein Teil der Schläge im Speicher nicht genutzt wird.

Der vorliegenden Erfindung, welche sich auf eine Vorrichtung der eingangs genannten Art bezieht, liegt die Aufgabe zugrunde, eine gedrängte Bauweise zu erreichen, um auf diese Weise die Verseilung selbst besonders regelmässig und effektiv durchführen zu können. Gemäss der Erfindung wird dies dadurch erreicht, dass für SZ-Verseilung mittels angetriebenen Rohrspeichers dieser ebenfalls zumindest teilweise im Inneren des konzentrischen Tragrohres verläuft und eine am Ende des Rohrspeichers angebrachte abziehbare Verseilscheibe über Lager gegen ein die Spinneinrichtung tragendes Aussenrohr abgestützt ist, das seinerseits über Lager auf dem feststehenden Tragrohr gehalten ist.

Rohrspeicher und Haltewendelspinner werden somit konzentrisch angeordnet, so dass der Abstand Verseilnippel - Abzugsvorrichtung minimiert werden kann.

Dadurch, dass der Rohrspeicher im Inneren des festen Tragrohres für den Spinner verläuft und die Verseilscheibe am Ende angebracht wird, ist für die Anordnung des Wendelspinners kein zusätzlicher Platz zwischen Nippel und Abzug erforderlich.

Weiterbildungen der Erfindung sind in den Unteransprüchen wiedergegeben.

Die Erfindung wird nachfolgend anhand einer Zeichnung näher erläutert, in der ein Ausführungsbeispiel dargestellt ist.

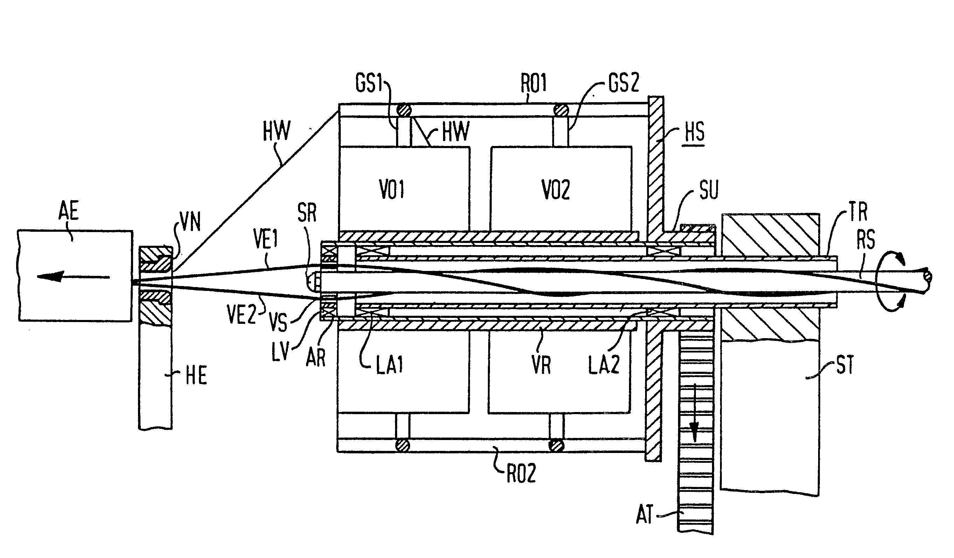

In der Figur ist zur Vereinfachung der Darstellung die Verseilung von nur zwei Verseilelementen VE1 und VE2 dargestellt. In der Praxis lassen sich natürlich, je nach den jeweiligen Anforderungen auch höhere Zahlen von Verseilelementen mit der erfindungsgemässen Vorrichtung verseilen. Diese Verseilelemente VE1 und VE2 werden auf der Oberfläche eines mit der Verseilscheibe VS angetriebenen Rohrspeichers RS vorverseilt, wobei dieser Rohrspeicher abwechselnd in der einen und dann in der anderen Drehrichtung bewegt wird. Dabei rollen die Verseilelemente in bekannter Weise auf dem Rohrspeicher ab und werden so mit weitergehender Rückdrehung verseilt. Die Antriebseinrichtung für den zur Verringerung der Masse rohrförmig ausgebildeten Rohrspeicher RS ist zur Vereinfachung der Darstellung nicht gezeichnet. Der Rohrspeicher RS ist an seinem rechten Ende (in hier nicht näher dargestellter Weise) über ein weiteres Lager abgestützt, während an dem dem Verseilnippel VN zugekehrten linken Ende eine fest mit dem Speicher verbundene Verseilscheibe VS und ein entsprechendes Aussenlager LV vorgesehen ist. Die Verseilscheibe VS weist axiale Bohrungen auf, in denen die Verseilelemente VE1, VE2 geführt sind. Am linken Ende des Rohrspeichers RS ist ein Gewinde angebracht, in welches eine Haltemutter SR eingedreht werden kann. Diese Haltemutter SR sichert, ggf. über hier nicht näher dargestellte Beilagenscheiben die Verseilscheibe VS in ihrer dargestellten Position. Andererseits ist durch Lösen der Haltemutter SR in einfacher Weise die Verseilscheibe VS demontierbar, wobei das zugehörige Aussenlager LV ebenfalls mit entfernt werden kann. Dies ist zweckmässig, um das Einfädeln der Verseilelemente in die Verseilscheibe zu erleichtern.

Der Verseilnippel VN ist in einer Halteeinrichtung HE befestigt, wobei am Ausgang eine Abzugseinrichtung AE vorgesehen ist, durch die die Torsion des verseilten Stranges verhindert wird. Die z.B. in Form einer Raupe ausgebildete Abzugseinrichtung AE und der Verseilnippel VN zusammen mit seiner Halteeinrichtung HE sind zweckmässig in axialer Richtung nach links verschiebbar ausgebildet, so dass für die Demontage der im rechten Teil der Zeichnung dargestellten Einrichtungen ausreichend Platz zur Verfügung steht. Andererseits kann während des Verseilvorganges der Verseilnippel VN sehr nahe an das Ende des Rohrspeichers RS und an die Verseilscheibe VS herangerückt werden. Die Verseilscheibe selbst kann bei Bedarf z.B. zur Änderung der Schlaglängenwahl oder zur Änderung der Zahl der Verseilelemente in einfacher Weise ausgetauscht werden, weil die Elemente HE, VN und AE nach links verschiebbar ausgebildet sind.

Koaxial zum Rohrspeicher RS ist in einem ortsfesten Ständer ST ein Tragrohr TR fest verankert, dessen Durchmesser so gross gewählt ist, dass für die Verseilung der Verseilelemente VE1, VE2 ausreichender Platz in seinem Inneren vorhanden ist. Am Ende dieses Tragrohres TR ist ein erstes Lager LA1 vorgesehen, während eingangsseitig, d.h. in der Nähe des Ständers ST ein zweites Lager LA2 angeordnet ist. Diese Lager LA1 und LA2 tragen eine drehbare Spinneinrichtung HS, die endseitig einen Stutzen SU aufweist, auf den eine entsprechende Antriebseinrichtung AT, z.B. in Form eines Zahnriemens oder dgl. einwirkt. Die als Zentralspinner ausgebildete Spinneinrichtung HS selbst kann topf- oder käfigförmig ausgebildet sein und weist dann in axialer Richtung verlaufende, über den Umfang verteilte Stäbe RO1, RO2 auf, sowie ringförmige Gestellteile GS1, GS2, weshalb diese Anordnung auch als «Laterne» bezeichnet wird. Im Inneren des so gebildeten käfigartigen Körpers sind zwei Vorratsspulen VO1, VO2 angebracht, wobei im vorliegenden Beispiel angenommen ist, dass die Vorratsspule VO1 für die aufzubringende Haltewendel HW derzeit angeschlossen ist, während die Vorratsspule VO2 in Reserve gehalten wird. Die Haltewendel HW tritt über der bekannten Spule auf die Aussenseite des Käfigs und verläuft dort axial bis zu seinem Ende. Von dort aus zieht sie sich schräg zum Eingang des Verseilnippels VN, wo die Haltewendel in geeigneter Weise auf das aus den einzelnen Verseilelementen VE1, VE2 usw. bestehende Bündel oder die verseilte Seele aufgebracht wird. Koaxial zu dem Tragrohr TR und dem Rohrspeicher RS verläuft ein die Spinneinrichtung tragendes Aussenrohr AR, das die Lager LA1 und LA2 abstützt. Im Zentrum der Spinneinrichtung HS ist ausserdem in üblicher Weise ein weiteres frei gelagertes Rohr VR vorgesehen, das die Relativbewegung der Wendelkopse gegenüber dem Spinnkäfig oder -topf ermöglicht. Dieses Rohr ist in nicht näher dargestellter Weise entweder gegenüber dem Spinntopfrohr gebremst oder separat angetrieben.

Die dargestellte Anordnung zeichnet sich durch eine besonders gedrängte Bauweise aus, weil die gleiche Baulänge doppelt ausgenützt wird und zwar einerseits für den Rohrspeicher RS und andererseits über das Tragrohr TR auch für die Spinneinrichtung HS. Durch den möglichen geringen Abstand zwischen der Verseilscheibe VS und dem Verseilnippel VN ist die Schlaglänge auch bei kurzen Schlaglängen ausreichend definiert, weil eine unterwünschte federnde Torsion der zu einem Bündel verseilten Verseilelemente VE1, VE2 weitgehend vermieden werden kann und zwar ohne zusätzliche Hilfsmittel. Der dargestellte Wendelspinner wird allein von dem Tragrohr TR gehalten, das gleichzeitig auch die Funktion für die endseitige Lagerung des Rohrspeichers RS mit übernimmt. Die Verseilscheibe VS sitzt zusammen mit dem zugehörigen Lager LV am Auslaufende des Rohrspeichers RS und ist zur Einrichtung der Maschine leicht trennbar. Die Abzugseinrichtung AE andererseits kann so nahe wie möglich an die Halteeinrichtung HE herangerückt werden, weil die beiden Teile in Längsrichtung für Montagearbeiten z.B. an der Verseilscheibe VS in einfacher Weise verschoben werden können. Der Verseilnippel VN wird sowohl für die zu verseilenden Adern als auch für die Haltewendel HW gleichzeitig verwendet.

Mit der dargestellten Verseileinrichtung lassen sich sonst nur mit Gleichschlagverseilung erreichbare, aus elektrischen oder mechanischen Gründen für das Kabel vorgegebene Schlaglängen im Bereich der mit dem Speicherrohr erzielbaren Schlagzahlen gleichmässige Schlaglängen erreichen.

## Patentansprüche

1. Vorrichtung zur Umspinnung von Verseilelementen, bei der auf einem feststehenden Tragrohr (TR) eine drehbare Spinneinrichtung (HS) angeordnet ist und im Inneren des Tragrohres (TR) die Verseilelemente verlaufen, dadurch gekennzeichnet, dass für SZ-Verseilung mittels angetriebenen Rohrspeichers (RS) dieser ebenfalls zumindest teilweise im Inneren des konzentrischen Tragrohres (TR) verläuft und eine am Ende des Rohrspeichers (RS) angebrachte abziehbare Verseilscheibe (VS) über Lager (LV) gegen ein die Spinneinrichtung (HS) (Zentralspinner) tragendes Aussenrohr (AR) abgestützt ist, das seinerseits über Lager (LA1, LA2) auf dem feststehenden Tragrohr (TR) gehalten ist.

2. Vorrichtung nach Anspruch 1, dadurch gekennzeichnet, dass das Ende des Rohrspeichers (RS) etwa mit dem spinnenden Ende der Spinneinrichtung (HS) abschliesst.

3. Vorrichtung nach Anspruch 1 oder 2, dadurch gekennzeichnet, dass direkt nach einem Verseilnippel (VN) eine Abzugseinrichtung (AE) angeordnet ist, die geeignet ist, die Torsion des verseilten Stranges zu verhindern.

4. Vorrichtung nach Anspruch 3, dadurch gekennzeichnet, dass der Verseilnippel (VN) zusammen mit der Abzugseinrichtung (AE) axial verschiebbar ausgebildet ist.

5. Vorrichtung nach Anspruch 1, dadurch gekennzeichnet, dass die Spinneinrichtung (HS) über zwei jeweils endseitig angeordnete Lager (LA1, LA2) auf dem feststehenden Tragrohr (TR) gehalten ist.

6. Vorrichtung nach Anspruch 1, dadurch gekennzeichnet, dass die Spinneinrichtung (HS) mit einem entsprechenden Antrieb versehen ist.

## Claims

1. Apparatus for the braiding of stranding elements, in which a rotatable spinning device (HS) is arranged on a stationary carrier tube (TR) and the stranding elements are arranged within the carrier tube (TR), characterised in that for SZ-stranding by means of a driven tubular magazine (RS), the latter is also arranged, at least in part, within the concentric carrier tube (TR), and a removable stranding disc (VS) located at the end of the tubular magazine (RS) is supported by bearings (LV) against an outer tube (AR) which carries the spinning device (HS) (central spinner) and is itself supported by bearings (LA1, LA2) on the stationary carrier tube (TR).

2. Apparatus according to claim 1, characterised in that the end of the tubular magazine (RS) terminates approximately with the spinning end of the spinning device (HS).

3. Apparatus according to claim 1 or claim 2, characterised in that, immediately after a stranding nipple (VN), there is arranged a draw-off device (AE) which is suitable for preventing torsion of the stranded cord.

4. Apparatus according to claim 3, characterised in that the stranding nipple (VN) is so designed as to be axially displaceable, together with the draw-off device (AE).

5. Apparatus according to claim 1, characterised in that the spinning device (HS) is supported on the stationary carrier tube (TR) by two bearings (LA1, LA2) arranged at either end.

6. Apparatus according to claim 1, characterised in that the spinning device (HS) is provided with a suitable drive.

**Revendications**

1. Dispositif pour le guipage d'éléments de câblage, dans lequel un dispositif rotatif de guipage (HS) rotatif est monté sur un tube de support (TR) fixe et dans lequel les éléments de câblage circulent à l'intérieur du tube de support (TR), caractérisé par le fait que pour le câblage SZ effectué au moyen d'un accumulateur tubulaire (RS) entraîné, ce dernier s'étend également au moins partiellement à l'intérieur du tube de transport concentrique (TR) et qu'une plaque de répartition (VS) amovible, montée à l'extrémité de l'accumulateur tubulaire (RS), est soutenue par l'intermédiaire de paliers (LV) sur un tube extérieur (AR) portant le dispositif de guipage (HS) (tête de guipage centrale) et qui pour sa part est maintenu par l'intermédiaire de paliers (LA1, LA2) sur le tube de support fixe (TR).

2. Dispositif suivant la revendication 1, caractérisé par le fait que l'extrémité de l'accumulateur tubulaire (RS) se termine approximativement au niveau de l'extrémité, effectuant le guipage, du dispositif de guipage (HS).

3. Dispositif suivant la revendication 1 ou 2, caractérisé par le fait qu'un dispositif de tirage (AE), qui est approprié pour empêcher la torsion du brin câblé, est disposé directement en aval d'une filière de guipage (VN).

4. Dispositif suivant la revendication 3, caractérisé par le fait que la filière de guipage (VN) ainsi que le dispositif de tirage (AE) sont réalisés de manière à être déplaçables axialement.

5. Dispositif suivant la revendication 1, caractérisé par le fait que le dispositif de guipage (HS) est maintenu par l'intermédiaire de deux paliers (LA1, LA2) montés à ses extrémités, sur le tube de support fixe (TR).

6. Dispositif suivant la revendication 1, caractérisé par le fait que le dispositif de guipage (HS) est équipé d'un dispositif d'entraînement approprié.